# EUROPÄISCHE PATENTSCHRIFT

(11) **EP 0 344 656 B1**
(45) Veröffentlichungstag und Bekanntmachung des Hinweises auf die Patenterteilung: **13.07.1994**
(21) Anmeldenummer: 89109585.3
(22) Anmeldetag: 27.05.1989
(51) Int. Cl.: B60R 1/06

(54) **Aussenspiegel für ein Fahrzeug, insbesondere für einen Lastkraftwagen**
Exterior mirror for a vehicle, especially for a motor lorry
Mirroir extérieur pour un véhicule, en particulier pour un camion

(30) Priorität: 01.06.1988 DE 8807152 U
(43) Veröffentlichungstag der Anmeldung: 06.12.1989
(73) Patentinhaber: HOHE KG, D-97903 Collenberg (DE)
(72) Erfinder: Eifert, Klaus, D-6985 Stadtprozelten (DE)
(74) Vertreter: Zinngrebe, Horst, Dr.rer.nat.

(56) Entgegenhaltungen:
- DE-A- 2 622 495
- FR-A- 2 087 135

## Beschreibung

Die Erfindung betrifft einen Außenspiegel für ein Fahrzeug nach dem Oberbegriff des Anspruchs 1. Ein solcher Außenspiegel ist aus dem Dokument FR-A-2 087 135 bekannt.

Aus der Gebrauchsmusterschrift DE-U-8716 105.2 ist ein Außenspiegel insbesondere für einen Lastkraftwagen oder einen Omnibus bekannt, bei dem das Spiegelgehäuse mittels einer zweiteiligen Schelte an einem geradlinigen Abschnitt einer Haltestange in mehreren Winkellagen bezüglich der Längsrichtung des Haltestangen-Abschnittes befestigt werden kann. Der Haltestangen-Abschnitt erstreckt sich im wesentlichen vertikal, wenn die Haltestange, wie üblich, an der Karosserie des Fahrzeugs gegebenenfalls schwenkbar befestigt ist. Diese Befestigungsart erlaubt eine Anpassung der Positionierung des Spiegelgehäuses an verschiedene Fahrzeugtypen wie auch an verschiedene Befestigungsstellen an der Fahrzeugkarosserie, so daß die Mittelstellung des meist vom Fahrzeuginneren aus verstellbaren Außenspiegels jeweils auf die Sitzposition eines durchschnittlichen Fahrers ausgerichtet ist.

Bei einzelnen Fahrzeugtypen können Betriebsbedingung auftreten, die zu einer stärkeren Schwingung der Haltestange führen. Wird der bekannte Außenspiegel ungeschickterweise an einem Abschnitt der Haltestange befestigt, an dem sich bei den erwähnten resonatorischen Schwingungen ein Schwingungsbauch ergibt, überträgt sich das Vibrieren der Haltestange ungedämpft auf den Spiegel, so daß der Fahrer dann nur ein unklares Bild im Spiegel erkennen kann.

Bei dem aus der französischen Patentschrift FR-A-2 087 135 bekannten Außenspiegel sind am Spiegelgehäuse zwei beabstandete Haltewinkel ausgebildet, von denen einer unmittelbar über eine Schelle und der andere über ein verlängerndes Zwischenstück und eine andere Schelle an der Haltestange befestigt ist.

Der Erfindung liegt daher die Aufgabe zugrunde, bei dem erwähnten Außenspiegel Maßnahmen vorzusehen, die eine stabilere und gegenüber Schwingungen der Haltestange unempfindlichere Halterung des Spiegels gestatten.

Diese Aufgabe wird durch einen Außenspiegel nach Patentanspruch 1 gelöst. Dadurch wird eine gegenüber der bekannten Befestigungsart des Spiegelgehäuses an der Haltestange stabilere Befestigung erreicht, die insbesondere in den Fällen ein Mitschwingen des Spiegelgehäuses praktisch ausschließt, in denen die Haltestange an einem oder beiden über das Spiegelgehäuse seitlich vorstehenden Teilen wie üblich zu einem U-förmigen Haltebügel geformt ist.

Damit ergeben sich für das Spiegelgehäuse drei mögliche Winkelstellungen relativ zur Haltestange, so daß der erfindungsgemäße Außenspiegel ohne weitere konstruktive Änderung für unterschiedliche Fahrzeugtypen eingesetzt werden kann, wobei der Spiegel in seiner Mittelstellung innerhalb seines Verstellbarkeitsbereichs stets auf die Sitzposition eines durchschnittlichen Fahrers ausgerichtet ist.

In besonders vorteilhafter Ausgestaltung der Erfindung sind ein erstes Paar Halteprofile auf einer Seite einer parallel zur Haltestange sich erstreckende Mittelebene des Außenspiegels vorgesehen und ein zweites Paar von Halteprofilen bezüglich der Mittelebene zu dem ersten Paar Halteprofilen symmetrisch an einer Spiegelgehäuserückwand ausgebildet.

Diese Form der Erfindung gestattet eine Montage des Außenspiegels an der Haltestange an zwei von der Fahrzeugkarosserie unterschiedlich beabstandeten Positionen, die sich etwa um 5 cm unterscheiden können. Die äußere Montageposition des Spiegelgehäuses an der Haltestange kommt vor allem für Fahrzeuge mit breiterer seitlicher Ausladung hinter dem Fahrerhaus in Betracht. Die Erfindung ermöglicht auch für solche Fälle die Verwendung eines unveränderten Spiegelgehäuses mit einer unveränderten Haltestange, so daß die Erfindung sowohl für breitere wie auch für schlankere Fahrzeuge universell verwendbar ist.

Da bei der erfindungsgemäßen Befestigungsart des Spiegelgehäuses an der Haltestange ersterers an den Verstellbewegungen des Spiegels nicht teilnimmt, kann bei starker Neigung des Spiegels für den Fahrer der untere Rand oder einer der Seitenränder des Spiegelgehäuses im Spiegelbild erscheinen und dadurch das nutzbare Sichtfeld einengen. Dazu ist in bevorzugter Ausgestaltung der Erfindung vorgesehen, daß der Spiegel in der Mittellage seines Verstellbarkeitsbereichs vor den Seitenrändern und dem unteren Rand des Spiegelgehäuses gehalten ist. Um bei dieser Gestaltung das Innere des Spiegelgehäuses vor eindringendem Schmutz und Regenwasser zu schützen ist eine Trägerplatte für den Spiegel an ihrem Rand mit einer umlaufenden, sich in das Innere des Spiegelgehäuses erstreckenden Schürze versehen.

Bevorgzugte Ausgestaltungen dar Erfindung sind in den Unteransprüchen angegeben.

Die Erfindung wird nachstehend anhand des in der beigefügten Zeichnung dargestellten Ausfführungsbeispiels im einzelnen beschrieben. Es zeigen:
- Fig. 1:: eine Seitenansicht eines an einem Haltestangen-Abschnitt angeklemmten Spiegelgehäuses;
- Fig. 2:: einen Vertikalschnitt durch den Außenspiegel nach Fig. 1;
- Fig. 3:: eine Draufsicht auf den Außenspiegel nach Fig. 1;
- Fig. 4:: einen Horizontalschnitt durch das Spiegelgehäuse nach Fig. 2 in Höhe der Linie A-A, wobei Teile des Tragbechers weggebrochen und Teile des Halteprofils geschnitten dargestellt sind;
- Fig. 5:: einen Ausschnitt aus dem Vertikalschnitt durch das Spiegelgehäuse gemäß Fig. 2.

Der nachfolgend beschriebene Außenspiegel ist in erster Linie zum Anbau an die Fahrer- oder Beifahrertür oder an die Karosserie eines Lastkraftwagens oder Omnibusses vorgesehen.

Das einteilige, aus hartem Kunststoff bestehende Spiegelgehäuse 10 besitzt einen im wesentlichen rechtwinkligen Boden 12, von dessen Rändern zwei gegenüberliegende Seitenwände 14, 16 sowie eine untere Seitenwand 18 und eine obere Seitenwand 20 nach einer Seite vorstehen. In einem mittleren Abschnitt des Bodens 12 ist ein Tragbecher 22 für eine konvex gebogene Spiegelträgerplatte 24 befestigt, in welchem nicht dargestellte Antriebsmittel elektrischer oder mechanischer Art zum Verstellen des auf die Außenseite der Spiegelträgerplatte 24 aufgeklebten konvexen Spiegels 26 vom Inneren des Fahrzeugs aus eingebaut sind.

Der Boden 12 besitzt um den Fuß 28 des Tragbechers 22 herum einen ebenen Zentralabschnitt 30, welcher sich parallel zu einer Ebene erstreckt, bezüglich welcher der Spiegel 26 bei seiner mittleren Einstellung innerhalb seines Verstellbereichs im wesentlichen symmetrisch liegt. An den Zentralabschnitt 30 des Bodens 12 schließt ein im wesentlichen ebener oberer Abschnitt als obere Schrägfläche 32 des Bodens 12 an, welche relativ zum Zentralabschnitt 30 auf den Spiegel 26 zu geneigt ist. An den Zentralabschnitt 30 schließt ein im wesentlichen ebener unterer Abschnitt als untere Schrägfläche 34 des Bodens an, welche relativ zum Zentralabschnitt 30 im gegensinniggleicher Weise wie die obere Schrägfläche 32 geneigt ist.

In der Nähe der oberen Seitenwand 20 ist an der oberen Schrägfläche 32 ein oberes Halteprofil 40 einer Befestigungsvorrichtung ausgebildet, mit welchem das Spiegelgehäuse 10 an einer Haltestange 4 befestigt werden kann. Dazu weist das obere Halteprofil 40 zwei horizontal beabstandete, jeweils mit Innengewinde versehene und sich in das Innere des Spiegelgehäuses 10 erstreckende Buchsen 42 auf, welche zur Befestigung einer die Haltestange 4 an der dem Halteprofil 40 abgewandten Seite umfassenden Schelle 44 mittels Schrauben 46, 48 dienen. Zwischen die Haltestange 4 und dem oberen Halteprofil 40 ist im Montagebereich der Schelle 44 ein von oben nach unten keilförmig zulaufendes oberes Zwischenstück 50 zwischengelegt, welches sich einerseits in einer nischenförmigen Einsenkung 52 des oberen Halteprofils 40 abstützt und andererseits mit ihrer konkaven Außenfläche gegen den auf das Halteprofil 40 zuweisenden Umfangsabschnitt der Haltestange 4 anliegt. Der Keilwinkel des oberen Zwischenstücks 50 gleicht dem Neigungswinkel der Schrägfläche 32 relativ zum Zentralabschnitt 30. Dadurch ergibt sich sowohl eine flächige Anlage des oberen Zwischenstücks 50 an der rohrförmigen Haltestange 4 wie auch eine flächige Abstützung in der Einsenkung 52.

Für den Fall, daß die Haltestange 4 rechtwinklingen oder quadratischen Querschnitt besitzt, versteht es sich, daß die Schelle 44 sowie das obere Zwischenstück 50 in formlicher Anpassung dann ebenfalls rechtwinklige Anlageflächen aufweisen.

In der Nähe der unteren Seitenwand 18 ist an der unteren Schrägfläche 34 ein unteres Halteprofil 41 des Spiegelgehäuses 10 vorgesehen, das dem oberen Halteprofil 40 im wesentlichen gleicht, also spiegelsymmetrisch zur horizontalen Mittelebene 39 des Außenspiegels ist. Demzufolge weist das untere Halteprofil 41 eine die Außenkontour der Haltestange 4 an dem vom Halteprofil 41 abgewandten Teil umfassende Schelle 45 sowie ein unteres Zwischenstück 51 auf, welches keilförmig nach oben unter einem Keilwinkel zuläuft, der der Neigung der unteren Schrägfläche 34 relativ zum Zentralabschnitt 30 entspricht. Das untere Zwischenstück 51, welches gleiche Stärke, gemessen quer zur Haltestange 4, wie das obere Zwischenstück 50 hat, verankert sich in einer nischenförmigen Einsenkung 53 in der Schrägfläche 34 und liegt mit seiner konkaven Außenfläche an dem dem Halteprofil 41 zuweisenden Umfangsteil der Haltestange 4 an.

Die Haltestange 4 ist im dargestellten Ausführungsbeispiel ein geradliniges Rohr, welches an einem oder beiden Enden zur Bildung eines Haltebügels rechtwinklig zu einem Haltebügel abgebogen und am Kraftfahrzeug befestigbar ist.

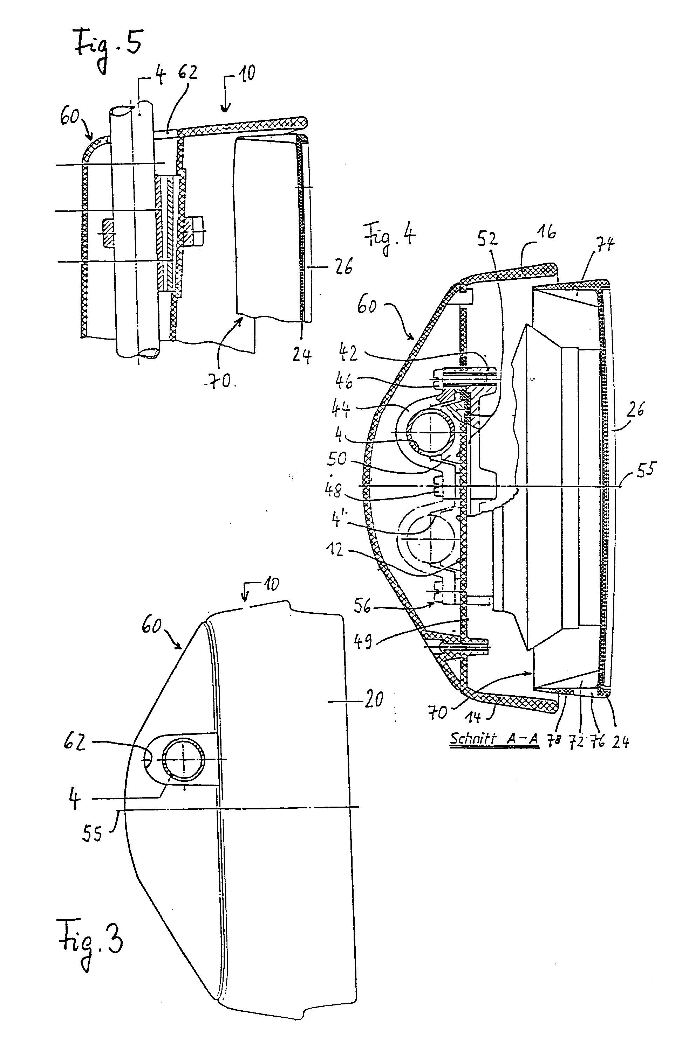

Auf die Außenseite des Bodens 12 ist eine Schutzkappe 60 aufgeschraubt, welche die gesamte Außenseite des Bodens 12 und die Haltestange 4 mit samt den beiden Halteprofilen 40, 41 des Spiegelgehäuses 10 abdeckt und dazu zwei fluchtende Öffnungen 62, 64 für den Durchtritt der Haltestange 4 besitzt. Wie Fig. 3 und 5 zeigen sind die Öffnungen 62, 64 groß genug, um eine Montage des Spiegelgehäuses 10 in jeder drei winkelmäßig versetzten Positionen an der Haltestange 4 zu ermöglichen.

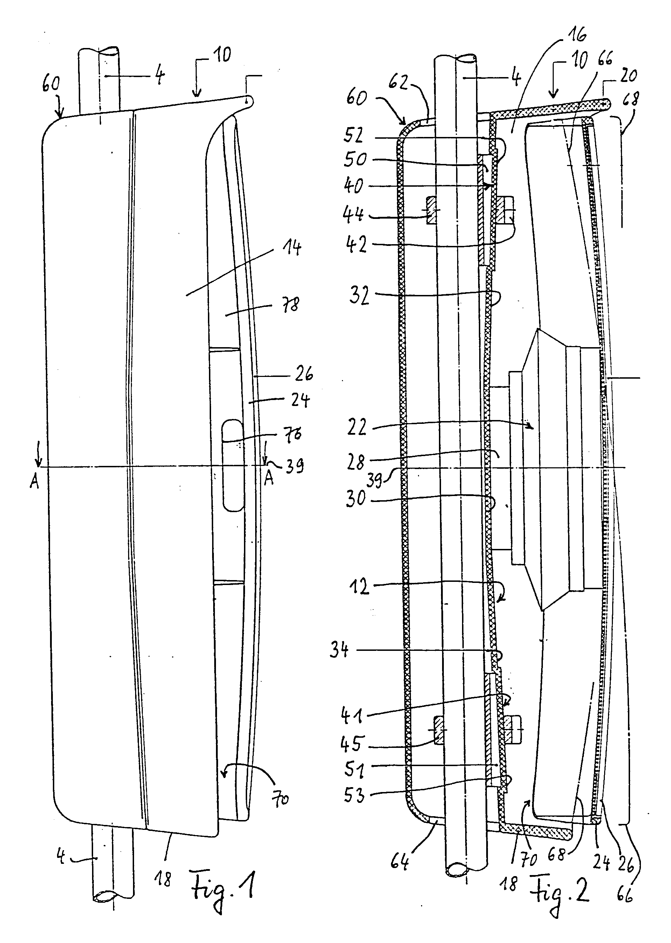

Eine erste Winkellage des Spiegelgehäuses 10 relativ zur Haltestange 4 zeigen Figuren 1 und 2. Dabei erstreckt sich der Zentralabschnitt 30 im wesentlichen parallel zur Haltestange 4, und das obere Zwischenstück 50 ist am oberen Halteprofil 40 des Spiegelgehäuses 10 und das untere Zwischenstück 51 am unteren Halteprofil 41 des Spiegelgehäuses 10 in der dargestellten Weise eingebaut.

Eine zweite Winkellage des Spiegelgehäuses relativ zur Haltestange 4 ergibt sich, wenn das obere Zwischenstück 50 und das untere Zwischenstück 51 hintereinander am oberen Halteprofil 40 (Fig. 5) eingebaut werden. Das Spiegelgehäuse 10 liegt dann mit der unterer Schrägfläche 34 an der Haltestange 4 an und nimmt daher eine weiter nach unten geneigte Stellung ein. Schließlich kann das Spiegelgehäuse in einer dritten Winkellage an der Haltestange 4 befestigt werden, wenn das obere Zwischenstück 50 und das untere Zwischenstück 51 am unteren Halteprofil 41 des Spiegelgehäuses 10 hintereinander eingebaut werden, so daß die obere Schrägfläche 32 an der Haltestange 4 anliegt. Das Spiegelgehäuse nimmt dann relativ zur Stange 4 eine weiter nach oben geneigte Stellung ein.

Die erwähnten Winkellagen des Spiegelgehäuses 10 relativ zur Haltestange 4 bestimmen die jeweilige Grundstellung des Spiegelgehäuses und damit die Mittelstellung des verstellbaren Spiegels 26 in Anpassung an die baulichen Gegebenheiten des jeweiligen Fahrzeugtyps und der Befestigungsart des Außenspiegels am Fahrzeug, wobei die Mittelstellung des Spiegel 26 jeweils auf die normale Sitzposition eines durchschnittlichen Fahrers ausgerichtet ist. Um die Stellung des Spiegels 26 an die individuellen Gegebenheiten des jeweiligen Fahrers anpassen zu können, ist es bekannt, die Stellung des Spiegels 26 vom Inneren des Fahrzeugs aus, wie erwähnt, elektrisch oder mechanisch innerhalb eines Bereichs zu verändern, der in Fig. 2 durch die beiden strichpunktierten Linien 66 und 68 angedeutet ist. Wird der Spiegel 26 sehr weit nach unten, etwa in den Bereich nahe der Grenzlinie 68 verstellt, besteht die Möglichkeit, daß der üblicherweise über das Spiegelglas hinaus vorstehende Rand des Spiegelgehäuses einen unteren Streifen des Spiegelglases abdeckt und damit die verfügbare Sichtfläche des Spiegels 26 verkleinert. Eine entsprechende Verkleinerung der Sichtfläche durch die setilichen Ränder des Spiegelgehäuses 10 kann sich bei sehr starker Verstellung des Spiegels 36 zur Seite ergeben.

Um diesem Mangel abzuhelfen sind die Seitenwände 14, 16 sowie die untere Wand 18 kürzer gehalten, so daß, wie insbesondere aus den Figuren 1, 2 und 4 zu erkennen ist, der Spiegel 26 seitlich und unten aus dem Spiegelgehäuse 10 hervorsteht. Um dennoch das Innere des Spiegelgehäuses 10, insbesondere den Antriebsmechanismus für die Verstellung des Spiegels 26, vor Wasser, Feuchtigkeit und Fremdpartikeln zu schützen, ist die Spiegelträgerplatte 24 mit einer an ihrem Rand umlaufenden Schürze 70 versehen, welche in unmittelbarer Nähe der Seitenwände sich in das Innere des Spiegelgehäuses erstreckt. An die Schürze 70 können Verstärkungsrippen 72, 74 (Fig. 4) angeformt sein. Damit bildet die Spiegelträgerplatte 24 einen in das Innere des Spiegelgehäuses offenen Käfig, welcher die äußeren Teile des Tragbechers 22 sowie den Antriebsmechanismus weitgehend umschließt.

Für den Fall, daß der Spiegel 26 mit Spiegelträgerplatte 24 mittels eines Klemmrings gemäß der deutschen Patentschrift 29 07 433 an dem Tragbecher befestigt ist, ist zu dessen Betätigung ein Schlitz 76 in einen seitlichen Abschnitt 78 der Schürze 70 eingeschnitten, durch den ein Werkzeug zur Verdrehung des nicht dargestellten Klemmrings eingefUhrt werden kann.

Wie insbesondere aus Fig. 4 zu erkennen ist, sind die Halteprofile 40, 41 bezüglich der zur Haltestange 4 parallel sich erstreckenden Mittelebene 55 des Außenspiegels zur Seite der Spiegelgehäuse-Seitenwand 16 hin versetzt ausgebildet. Entsprechend ist auch die Öffnung 62 in d er Schutzkappe 60 bezüglich der Mittelebene 55 seitlich versetzt.

Spiegelbildlich zu dem ersten Paar von Halteprofilen 40, 41 ist auf der anderen Seite der Mittelebene 55 in der Nähe der Spiegelgehäuse-Seitenwand 14 ein weiteres Paar Halteprofile ausgebildet, von denen in Fig. 3 das Halteprofil 56 im ganzen bezeichnet ist. Dazu erstreckt sich jede der beiden Einsenkungen 52, 53 quer zur Mittelebene 55 von einem der Halteprofile 40, 41 des ersten Paares zu dem gegenüberliegenden Halteprofil 56 des zweiten Halteprofilpaares. Es versteht sich, daß auf der Innenseite der Spiegelgehäuse-Rückwand 12 entsprechende Buchsen 42 an den Haltepaaren 56 sowie entsprechende Durchbrüche durch die Spiegelgehäuse-Rückwand 12 vorgesehen sind. Man bemerke ferner, daß die der Buchse 42 entsprechende weitere Buchse 49, die zur Aufname der Schraube 48 dient, symmetrisch von der Mittellinie 55 durchsetzt wird.

Damit wird es möglich, das Spiegelgehäuse an der Haltestange 4 entweder mit Hilfe des ersten oder des zweiten Paares von Halteprofilen zu befestigen, wobei sich bei letzteren die Haltestange bei der Darstellung in Fig. 3 gemäß 4′ längs der Spiegelgehäuse-RÜckwand 12 erstreckt. Entsprechend kann die Schutzkappe 60 um eine in der Mittelebene 55 liegende Achse gedreht und auf der Spiegelgehäuse-Rückwand 12 verklemmt oder verschraubt werden, wobei dann die Öffnung 62 auf der anderen Seite der Mittelebene 55 liegt und dort den Durchtritt der Haltestange 4′ ermöglicht. Damit kann das Spiegelgehäuse in zwei unterschiedlichen Entfernungen vom Fahrerhaus des LKW an ein und derselben Haltestange befestigt werden, so daß das Spiegelgehäuse ohne konstruktive Änderung für Lastkraftwagen mit einer Ladeaufbaubreite von sowohl 2,50 m wie auch von 2,60 m verwendet werden kann, wobei der Abstand der beiden Halteprofil-Paare etwa 5 cm beträgt.

Man erkennt ferner aus Fig. 4, daß statt der Buchsen 42 für die Schrauben 46, 48 auch ein Riegel mit zwei buchsenartigen Enden verwendet werden kann, welcher um die Mitte der Schraube 48 nach der einen oder anderen Seite bezüglich der Mittelebene je nach Wahl der Befestigungslage des Spiegelgehäuses verschwenkt werden kann.

## Patentansprüche

1. Außenspiegel für ein Fahrzeug, insbesondere für einen Lastkraftwagen, mit einer an der Karosserie des Fahrzeugs befestigbaren Haltestange (4) und mit einem einen Spiegel (26) beherbergenden Spiegelgehäuse (10), welches eine Befestigungsvorrichtung (40, 41) aufweist, mit der das Spiegelgehäuse (10) an der Haltestange (4) befestigte werden kann, wobei an dem Spiegelgehäuse zwei Halteprofile (40, 41) ausgebildet sind, von denen je ein Halteprofil in der Nähe je einer von zwei gegenüberliegenden Spiegelgehäuse-Seitenwände (18, 20) vorgesehen ist, sowie mit wenigstens einem Zwischenstück (50, 51), welches zwischen eines der Halteprofile (40, 41) und die Haltestange (4) bei an der Haltestange (4) befestigtem Spiegelgehäuse (10) zwischengelegt ist und die beiden Halteprofile an dem Spiegelgehäuseboden (12) ausgebildet sind, dadurch gekennzeichnet, daß der Spiegelgehäuseboden in der Nähe der beiden gegenüberliegenden Spiegelgehäuse-Seitenwände (18, 20) je eine Schrägfläche (32, 34) aufweist, wobei in jeder der beiden Schrägflächen je eines der Halteprofile (40, 41) ausgebildet ist und daß das Zwischenstück (50, 51) keilförmige Form mit einem Keilwinkel hat, der der Neigung der Schrägflächen (32, 34) relativ zu einem mittleren Abschnitt (30) des Spiegelgehäusebodens (12) entspricht.

2. Außenspiegel nach Anspruch 1, dadurch gekennzeichnet, daß jedes der beiden Halteprofile eine nischenförmige Einsenkung (52, 53) aufweist, in welcher das Zwischenstück verankerbar ist.

3. Außenspiegel nach einem der Ansprüche 1 oder 2, dadurch gekennzeichnet, daß das Zwischenstück eine Außenkontour hat, die der dem Spiegelgehäuse (10) benachbarten Außenkontour der Haltestange (4) angeglichen ist.

4. Außenspiegel nach einem der vorstehenden Ansprüchen, dadurch gekennzeichnet, daß ein erstes Paar Halteprofile (40, 41) auf einer Seite einer parallel zur Haltestange (4) sich erstreckenden Mittelebene (55) des Außenspiegels vorgesehen ist und daß ein zweites Paar von Halteprofilen (56) bezüglich der Mittelebene (55) zu dem ersten Paar Halteprofilen symmetrisch an einer Spiegelgehäuse-Rückwand (12) ausgebildet sind.

5. Außenspiegel nach einem der Ansprüche 2-4, dadurch gekennzeichnet, daß je eine nischenförmige Einsenkung (52; 53) sich über je zwei bezüglich der Mittelebene (55) gegenüberliegende Halteprofile erstreckt.

6. Außenspiegel nach einem der vorstehenden Ansprüchen, dadurch gekennzeichnet, daß der Spiegel (26) vor die Ränder der unteren Seitenwand (18) sowie der beiden angrenzenden Seitenwände (14, 16) des Spiegelgehäuses (10) mittels einer Spiegelträgerplatte (24) gehalten ist, aus deren der unteren Seitenwand und den beiden angrenzenden Seitenwänden des Spiegelgehäuses (10) benachbarten Randabschnitten eine zusammenhängende Schürze (70) in das Innere des Spiegelgehäuses (10) vorsteht.

7. Außenspiegel nach Anspruch 6, dadurch gekennzeichnet, daß die Schürze (70) um die Spiegelträgerplatte (24) umläuft.

8. Außenspiegel nach Anspruch 6 oder 7, dadurch gekennzeichnet, daß die Schürze einen Schlitz (76) für ein Werkzeug zur Betätigung eines an sich bekannten Klemmrings aufweist.

9. Außenspiegel nach einem der vorstehenden Ansprüche, dadurch gekennzeichnet, daß auf die Außenseite des Spiegelgehäusebodens (12) eine Schutzkappe (60) aufgeschraubt ist, welche die gesamte Außenseite des Bodens (12) und die Haltestange (4) mitsamt den beiden Halteprofilen (40, 41) des Spiegelgehäuses (10) abdeckt und zwei fluchtende Öffnungen (62, 64) für den Durchtritt der Haltestange (4) besitzt.

10. Außenspiegel nach Anspruch 9, dadurch gekennzeichnet, daß die Öffnungen (62, 64) in der Schutzkappe (60) bezüglich einer Mittelebene (55) der Haltestange (4) seitlich versetzt sind.

## Claims

1. An exterior mirror for a vehicle, in particular a lorry, comprising a supporting rod (4) which can be fixed to the body of the vehicle and comprising a mirror housing (10) receiving a mirror (26), the said mirror housing (10) having a fixing device (40,41) by means of which the mirror housing (10) can be fixed to the supporting rod (4), two holding profiles (40,41) being formed on the mirror housing, one holding profile being provided in proximity to each of two opposing side walls (18,20) of the mirror housing, and comprising at least one intermediate piece (50,51) which is interposed between one of the holding profiles (40,41) and the supporting rod (4) when the mirror housing (10) is fixed to the supporting rod (4), the two holding profiles being formed on the base (12) of the mirror housing, characterised in that the mirror housing base has an oblique surface (32,34) in proximity to each of the two opposing mirror housing side walls (18,20), one of the holding profiles (40,41) being formed in each of the two oblique surfaces, and in that the intermediate piece (50,51) is wedge-shaped and has a wedge angle which corresponds to the inclination of the oblique surfaces (32,34) relative to a central portion (30) of the mirror housing base (12).

2. An exterior mirror according to claim 1, characterised in that each of the two holding profiles has a recess-like depression (52,53) in which the intermediate piece can be anchored.

3. An exterior mirror according to either one of claims 1 and 2, characterised in that the intermediate piece has an outer contour which is adapted to the outer contour of the supporting rod (4) adjacent to the mirror housing (10).

4. An exterior mirror according to any one of the preceding claims, characterised in that a first pair of holding profiles (40,41) is provided on one side of a central plane (55) of the exterior mirror, the said central plane (55) extending parallel to the supporting rod (4), and in that a second pair of holding profiles (56) is formed symmetrically on a rear wall (12) of the mirror housing in relation to the first pair of holding profiles relative to the central plane (55).

5. An exterior mirror according to any one of claims 2 to 4, characterised in that each recess-like depression (52,53) extends over two holding profiles which are opposed relative to the central plane (55).

6. An exterior mirror according to any one of the preceding claims, characterised in that the mirror (26) is held by means of a mirror carrier plate (24) in front of the edges of the lower side wall (18) and the two adjacent side walls (14,16) of the mirror housing (10), a connected apron (70) projecting into the interior of the mirror housing (10) from the edge portions of the mirror carrier plate (24) adjacent to the lower side wall and the two adjoining side walls of the mirror housing (10).

7. An exterior mirror according to claim 6, characterised in that the apron (70) extends round the mirror carrier plate (24).

8. An exterior mirror according to claim 6 or 7, characterised in that the apron has a slot (76) for a tool for manipulating a clamping ring known per se.

9. An exterior mirror according to any one of the preceding claims, characterised in that a protective cap (60) is screwed onto the outside of the mirror housing base (12), the said protective cap (60) covering the entire outer surface of the base (12) and the supporting rod (4) together with the two holding profiles (40,41) of the mirror housing (10) and having two aligned openings (62,64) for the passage of the supporting rod (4).

10. An exterior mirror according to claim 9, characterised in that the openings (62,64) in the protective cap (60) are laterally displaced relative to a central plane (55) of the supporting rod (4).

## Revendications

1. Rétroviseur extérieur pour un véhicule, en particulier pour un camion, avec une tige de maintien (4) pouvant être fixée sur la carrosserie du véhicule et avec un corps de rétroviseur (10) logeant un miroir (26), lequel comprend un dispositif de fixation (40, 41), avec lequel le corps de rétroviseur (10) peut être fixé sur la tige de maintien (4), deux profilés de maintien (40, 41) étant formés sur le corps de rétroviseur, dont chaque profilé de maintien est prévu à proximité de l'une de deux parois latérales de corps de rétroviseur opposées (18, 20), ainsi qu'avec au moins une pièce intermédiaire (50, 51), laquelle est intercalée entre l'un des profilés de maintien (40, 41) et la tige de maintien (4), le corps de rétroviseur (10) étant fixé à la tige de maintien (4), et les deux profilés de maintien étant formés sur le fond du corps de rétroviseur (12), caractérisé en ce que le fond du corps de rétroviseur présente à proximité des deux parois latérales de corps de rétroviseur opposées (18, 20) une surface oblique (32, 34), un respectif des profilés de maintien (40, 41) étant formé dans chacune des deux surfaces obliques et en ce que la pièce intermédiaire (50, 51) a une forme en coin avec un angle de coin qui correspond à l'inclinaison des surfaces obliques (32, 34) par rapport à la partie centrale (30) du fond du corps de rétroviseur (12).

2. Rétroviseur extérieur selon la revendication 1, caractérisé en ce que chacun des deux profilés de maintien présente un renfoncement en forme de niche (52, 53) dans lequel la pièce intermédiaire est ancrée.

3. Rétroviseur extérieur selon l'une des revendications 1 ou 2, caractérisé en ce que la pièce intermédiaire a un contour extérieur qui est adapté au contour extérieur de la tige de maintien (4) voisin du corps de rétroviseur (10).

4. Rétroviseur extérieur selon l'une des revendications précédentes, caractérisé en ce qu'une première paire de profilés de maintien (40, 41) est prévue sur un côté d'un plan central (55) du rétroviseur extérieur s'étendant parallèlement à la tige de maintien (4) et en ce qu'une deuxième paire de profilés de maintien (56) est formée sur une paroi arrière de corps de rétroviseur (12), symétriquement à la première paire de profilés de maintien, par rapport au plan central (55).

5. Rétroviseur extérieur selon l'une des revendications 2 à 4, caractérisé en ce qu'un renfoncement respectif en forme de niche (52 ; 53) s'étend au-dessus de l'un respectif de deux profilés de maintien opposés par rapport au plan central (55).

6. Rétroviseur extérieur selon l'une des revendications précédentes, caractérisé en ce que le miroir (26) est maintenu devant les bords de la paroi latérale inférieure (18) ainsi que des deux parois latérales contiguës (14, 16) du corps de rétroviseur (10) au moyen d'une plaque support de miroir (24) de laquelle un tablier connexe (70) dépasse à l'intérieur du corps de rétroviseur (10) des sections de bords voisines de la paroi latérale inférieure et des deux parois latérales contiguës du corps de rétroviseur (10).

7. Rétroviseur extérieur selon la revendication 6, caractérisé en ce que le tablier (70) tourne autour de la plaque support de miroir (24).

8. Rétroviseur extérieur selon la revendication 6 ou 7, caractérisé en ce que le tablier présente une fente (76) pour un outil afin d'actionner un anneau de serrage connu en soi.

9. Rétroviseur extérieur selon l'une des revendications précédentes, caractérisé en ce que sur le côté extérieur du fond du corps de rétroviseur (12) est vissé un couvercle de protection (60), lequel recouvre tout le côté extérieur du fond (12) et la tige de maintien (4) ainsi que les deux profilés de maintien (40, 41) du corps de rétroviseur (10) et possède deux orifices alignés (62, 64) pour le passage de la tige de maintien (4).

10. Rétroviseur extérieur selon la revendication 9, caractérisé en ce que les orifices (62, 64) dans le couvercle de protection (60) sont décalées latéralement par rapport à un plan central (55) de la tige de maintien (4).
